# EUROPEAN PATENT SPECIFICATION

(11) **EP 1 226 998 B1**
(45) Date of publication and mention of the grant of the patent: **07.11.2007**
(21) Application number: 02001804.0
(22) Date of filing: 25.01.2002
(51) Int. Cl.: B60N 2/30, B62D 33/06

(54) **Cab of an industrial vehicle, provided with a seat**
Fahrerhaus eines Nutzfahrzeuges, mit einem Sitz
Cabine d'un véhicule industriel, équipée d'un siège

(30) Priority: 30.01.2001 IT TO010088
(43) Date of publication of application: 31.07.2002
(73) Proprietor: IVECO S.p.A., 10156 Torino (IT)
(72) Inventor: Ropolo, Bruno, 14010 San Paolo Solbrito (IT); Molinari, Andrea, 10025 Pino Torinese (IT)
(74) Representative: Gervasi, Gemma

(56) References cited:
- DE-A- 3 507 529
- DE-A- 4 132 279
- FR-A- 2 031 438
- FR-A- 2 761 309
- GB-A- 2 128 473

## Description

The present invention refers to a cab for an industrial vehicle, cf. DE-A-41 32 279 showing all of the features of the preamble of claim 1.

As is known, cabs of industrial vehicles, in particular of heavy long-distance lorries, are traditionally provided with two seats side by side, one being the main driving seat and the other an auxiliary passenger seat. This type of traditional arrangement derives from the habit, which has now been superseded, of using two drivers that take it in turns to drive. For a number of years now, due to increasing personnel costs and thanks to improved driving comfort, the trend to use one single driver for each vehicle has become an established practice. It follows that an auxiliary seat for the passenger positioned beside the main seat and basically identical to the latter is unnecessary in the majority of cases and even disadvantageous as it limits the space available inside the cab for recreational activities when the driver is not driving.

The aim of the present invention is to produce a cab for an industrial vehicle in order to minimise impediments in the cab and permit rational flexible use of the space in the cab itself.

The above-mentioned aim is achieved by the present invention as it relates to

a cab for an industrial vehicle according to claim 1.

For a better understanding of the present invention, a preferred embodiment is described below as a non-restrictive example and with reference to the attached drawings, in which:
figure 1 is a schematic overhead view of a cab of an industrial vehicle according to the invention; provided with an auxiliary seat according to the invention;
figure 2 is an elevated view of a backrest of the seat of figure 1;
figure 3 is a section according to the line III-III of figure 2;
figure 4 is a partial perspective view of a first configuration of the cab; and
figure 5 is a partial perspective view of a second configuration of the cab.

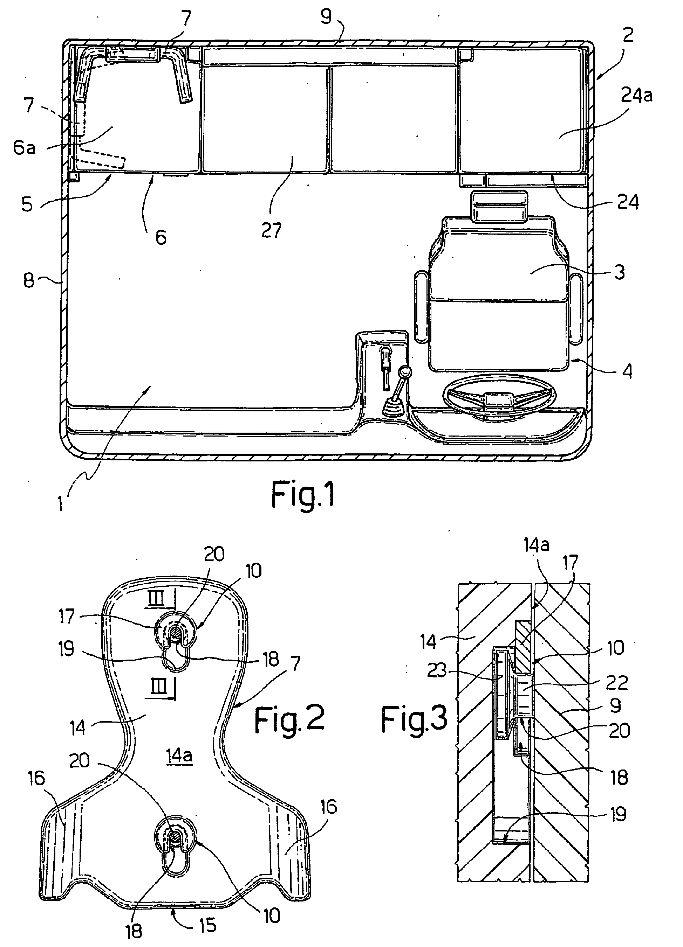

With reference to figures 1, 4 and 5, number 1 indicates as a whole a cab of an industrial vehicle 2, in particular a heavy long-distance lorry.

The cab 1 comprises a main driving seat 3, positioned in a front and side area 4 of the cab 1, and an auxiliary seat 5.

According to the present invention, the auxiliary seat 5 comprises a seat 6 and a backrest 7 which can be removed from the seat 6. Conveniently, the seat 6 consists of a basically parallelepiped step-like structure forming part of the internal bodywork of the cab 1, and is positioned adjacent to a side wall 8 of the cab 1, opposite the main driving seat 3, and to a rear wall 9 of the cab itself. The seat 6 is conveniently provided with a padded cushion 6a.

The backrest 7 consists of one single pre-formed body made of suitably upholstered foamed plastic, for example, and integrally comprises a main central body 14 provided with a supporting base 15, constituting the backrest proper, and a pair of lateral armrests 16.

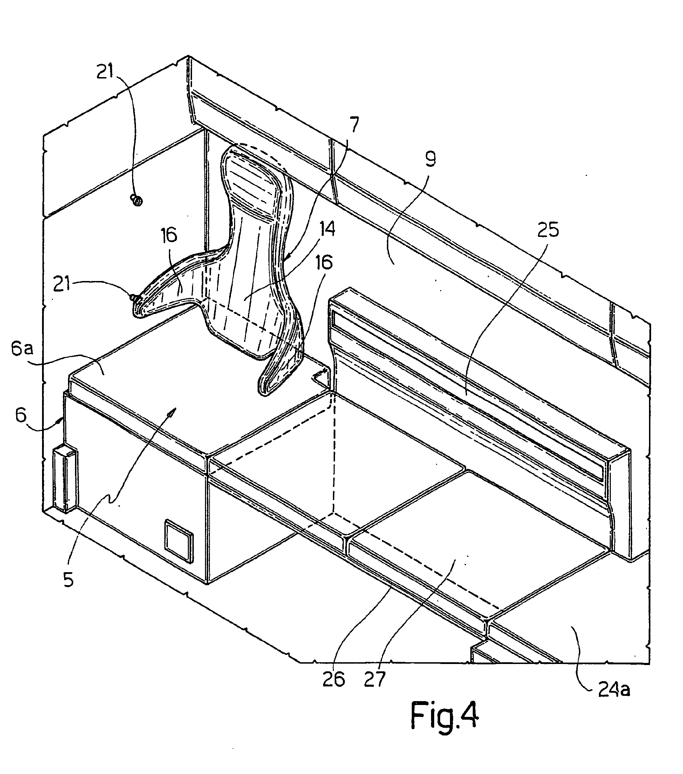

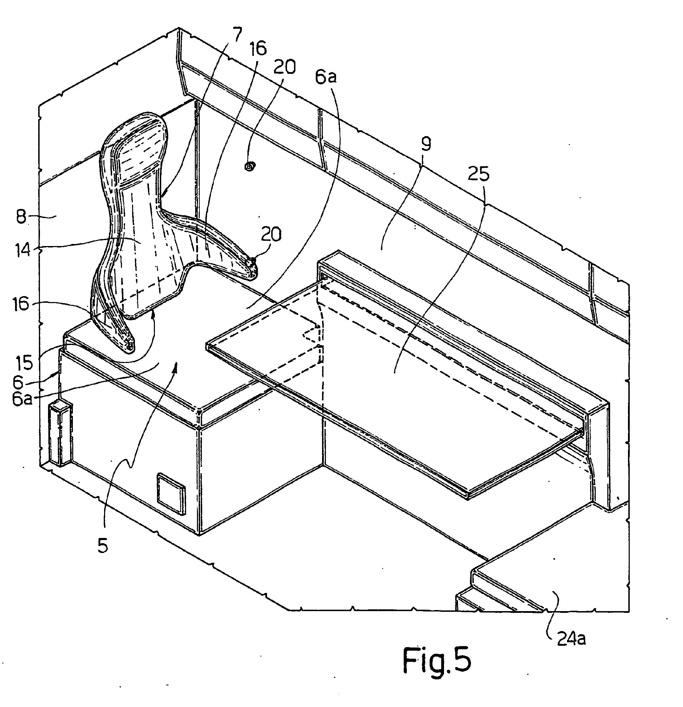

The backrest 7 can be rested on the seat 6 in at least two different positions (figures 4 and 5), and in particular with its rear surface 14a resting against the rear wall 9 or the side wall 8. Conveniently, the backrest 7 is provided with a pair of bayonet coupling devices 10 positioned one above the other in an intermediate area of the rear surface 14a.

Each device 10 consists of a basically horseshoe-shaped plate 17, with a central seat 18 opening downwards, which is fitted to the backrest 10 flush with the rear surface 14a and frontally delimits an upper portion of a recess 19 made in the surface 14a. The coupling devices 10 are designed to co-operate, alternatively, with corresponding anchoring elements 20 fitted on the rear wall 9 or with corresponding anchoring elements 21 fitted on the side wall 8. The elements 20 are basically mushroom-shaped, each comprising a stem 22 fitted to the rear wall 9 or side wall 8 of the cab 1, and an enlarged end head 23. As clearly illustrated in figure 3, the backrest 7 is locked in the first or second position described above by engagement of the coupling devices 10 with the respective anchoring elements 20 or 21, so that the stem 22 of each anchoring element 20 or 21 engages the groove 18 of the respective coupling device 10 and the head 23 fits into the recess 19 of the backrest 7 and is retained by the plate 17.

Conveniently, the cab 1 comprises a further seat 24 positioned symmetrically to the seat 6 on the other side of the cab itself, behind the driving seat 3, it too being conveniently provided with a padded cushion 24a. Between the two seats 6 and 24 a table 25 is provided which is movable between a retracted position (figure 4) and an extended position (figure 5) in which it projects from the rear wall 9.

In the first position of the backrest 7 (figure 4), the auxiliary seat 5 faces forward in the conventional manner. In the second position of the backrest 7 (figure 5), the auxiliary seat 5 faces sideways and can be used, for example, in combination with the table 25 in the extended position for eating, reading or recreational activities when the driver is not driving.

When the table 25 is in the retracted position (figure 4), between the seats 6 and 24, an auxiliary panel 26 can be fitted provided with padding 27 creating, together with seats 6 and 24, a continuous surface which can be used as a bed by removing the backrest 7.

An examination of the characteristics of the cab according to the present invention highlights the advantages it offers. In particular, as can be clearly seen from figures 1, 4 and 5, it is possible to obtain different configurations of the cab 1 by setting the backrest 7 to different relative positions with respect to the seat 6, and leave a large area of the cab 1 free, without any impediments, so that full use can be made of the cab space during stops.

Finally, it is clear that modifications and variations can be made to the cab 1 described, and in particular to the auxiliary seat 5, which remain within the scope of the claims. In particular, the coupling devices 10 and the corresponding anchoring elements 20 and 21 can be modified. The anchoring elements 21, can be used only when the vehicle is at a standstill.

## Claims

1. Cab (1) for an industrial vehicle (2) of the type comprising a main driving seat (3) and an auxiliary seat (5) featuring a seat (6) and a backrest (7),
said auxiliary seat (5) comprising coupling devices (10) arranged on a rear surface (14a) of the backrest (7),
**characterised in that** said backrest (7) integrally comprises a pair of armrests (16) and said coupling devices (10) are designed to cooperate alternatively with first anchoring elements (20) supported by a rear wall (9) of the cab (1) or with second anchoring elements (21) supported by a side wall (8) of said cab (1) so that said backrest (7) is removable from the seat (6) and positionable with respect to said seat in at least two different arrangements.

2. Cab according to claim 1, wherein said seat (6) is positioned adjacent to the side wall (8) opposite the main driving seat (3) and the rear wall (9).

3. Cab according to claim 2, wherein said seat (6) consists of a step-like structure forming part of the internal bodywork of the cab (1).

4. Cab according to one of the claims from 1 to 3, wherein a further seat (24a) is positioned behind the main driving seat (3), adjacent to the rear wall (9) of the cab (1).

5. Cab according to claim 4, wherein there is provided an auxiliary panel (26) designed to be fitted between said seat (6) and further seat (24a) to form a continuous surface therewith.

## Patentansprüche

1. Fahrerhaus (1) für ein Nutzfahrzeug (2) von dem Typ, welcher einen Hauptsitz (3) für den Fahrer und einen aus Sitzfläche (6) und Rückenlehne (7) bestehenden Hilfssitz (5) umfasst, wobei der genannte Hilfssitz (5) Kopplungsvorrichtungen (10) aufweist, die auf der Rückseite (14a) der Rückenlehne (7) angeordnet sind,
**dadurch gekennzeichnet, dass** die genannte Rückenlehne (7) als fester Bestandteil ein Paar von Armstützen (16) umfasst und die genannten Kopplungsvorrichtungen (10) dergestalt ausgelegt sind, dass sie abwechselnd mit ersten Verankerungselementen (20), die an der Rückwand (9) der Fahrerkabine (1) befestigt sind, oder mit zweiten Verankerungselementen (21), die an einer Seitenwand (8) des genannten Fahrerhauses (1) befestigt sind, dergestalt zusammenwirken, dass die genannte Rückenlehne (7) von der Sitzfläche Sitz (6) abnehmbar ist und in Bezug auf diese Sitzfläche in mindestens zwei unterschiedlichen Anordnungen positioniert werden kann.

2. Fahrerhaus gemäß Anspruch 1, bei welchem die genannte Sitzfläche (6) an der gegenüber dem eigentlichen Fahrersitz (3) befindlichen Seitenwand (8) und der Rückwand (9) positioniert wird.

3. Fahrerhaus gemäß Anspruch 2, bei welchem die genannte Sitzfläche (6) aus einer stufenförmigen Konstruktion besteht, welche einen Teil des Innenbereichs der Karosserie bildet.

4. Fahrerhaus gemäß einem der Ansprüche 1 bis 3, bei welchem eine weiterer Sitzfläche (24a) hinter dem eigentlichen Fahrersitz (3) an der Rückwand (9) des Fahrerhauses (1) positioniert wird.

5. Fahrerhaus gemäß Anspruch 4, bei welchem eine Hilfstafel (26) vorhanden ist, die so ausgelegt ist, dass sie zwischen der genannten Sitzfläche (6) und einen weiteren Sitz (24a) passt, um mit diesem eine durchgehende Fläche zu bilden.

## Revendications

1. Cabine (1) pour un véhicule industriel (2) du type comportant un siège de conduite principal (3) et un siège auxiliaire.(5) comportant une assise (6) et un dossier (7),
ledit siège auxiliaire (5) comportant des dispositifs d'accouplement (10) agencés sur une surface arrière (14a) du dossier (7),
**caractérisée en ce que** ledit dossier (7) comporte d'un seul tenant deux accoudoirs (16) et lesdits dispositifs d'accouplement (10) sont conçus pour coopérer alternativement avec des premiers éléments d'ancrage (20) supportés par une paroi arrière (9) de la cabine (1) ou avec des seconds éléments d'ancrage (21) supportés par une paroi latérale (8) de ladite cabine (1) de sorte que ledit dossier (7) puisse être enlevé de l'assise (6) et positionné par rapport à ladite assise selon au moins deux agencements différents.

2. Cabine selon la revendication 1, dans laquelle ladite assise (6) est positionnée adjacente à la paroi latérale (8) opposée au siège de conduite principal (3) et adjacente à la paroi arrière (9).

3. Cabine selon la revendication 2, dans laquelle ladite assise (6) est constituée d'une structure analogue à une marche formant une partie de la carrosserie intérieure de la cabine (1).

4. Cabine selon l'une quelconque des revendications 1 à 3, dans laquelle une autre assise (24a) est positionnée derrière le siège de conduite principal (3), adjacente à la paroi arrière (9) de la cabine(1).

5. Cabine selon la revendication 4, dans laquelle est agencé un panneau auxiliaire (26) conçu pour être adapté entre ladite assise (6) et l'autre assise (24a) pour former une surface continue avec celle-ci.
